# EUROPEAN PATENT APPLICATION

(11) **EP 3 514 772 A1**
(43) Date of publication of application: **24.07.2019**
(21) Application number: 18153098.1
(22) Date of filing: 23.01.2018
(51) Int. Cl.: G07G 1/00, G06Q 20/18, G06Q 20/20

(54) **SELF-CHECKOUT APPARATUS**

(71) Applicant: Checkout Technologies srl, 37122 Verona (IT)
(72) Inventor: Levkovskiy, Jegor, 14020 Villa San Secondo (AT) (IT); Pandian, Enrico, 37129 Verona (IT)
(74) Representative: Bottino, Giovanni

(57) **Abstract**

Self-checkout apparatus for point-of-sale, comprising a collection section (1) having a bagging area within which items are collected as placed therein by a user and a transfer section (2) wherein the items are transferred by the user from a shopping cart or a shopping basket (30) to the collection section (1). The apparatus comprises one or more video cameras (4) disposed with a field of view of the transfer section (2) and/or of the collection section (1) for generating one or more video streams and video stream analysing means, which analysing means comprise means for automatic recognition of items communicating the recognized items to a device filling in a checkout list (8).

## Description

The present invention relates to a self-checkout apparatus for point-of-sale. The apparatus comprises a collection section having a bagging area within which items are collected as placed therein by a user and a transfer section wherein the items are transferred by the user from a shopping cart or a shopping basket to the collection section.

The technical field of the invention generally relates to techniques for identifying items autonomously by a customer at a checkout station in order to fill in a checkout list and to proceed to the purchase.

Traditionally, a cashier receives the items to be purchased and scans them with a barcode scanner. By doing this, the cashier also ensures that all items are properly scanned. The items are successively bagged and the customer proceeds to the payment.

Nowadays an increasing number of retail stores employ customer self-control options, in which the customer assumes responsibility for scanning and bagging items with little or no supervision by store staff. Such self-control options are usually carried out by means of a self-checkout apparatus for point-of-sale, equipped with a barcode scanner and usually with a weight sensor. The weight information is used to verify the accuracy of the optical barcode scan: each item is provided with a univocal barcode and the system stores also its weight information, so that when a scanned barcode and the measured weight refer to the same item, no alarm is generated. On the contrary, if there is a discrepancy between the two information, the apparatus stops and requires adjustments.

The use of a barcode scanner for recognizing the object is time consuming, especially when it is operated by an ordinary customer as at a self-checkout station, who is not as skilled as a cashier in orienting correctly the item to the scanner to make it read the barcode on the item.

A similar self-checkout apparatus is disclosed by document US 7,909,248 B1. Such document describes an apparatus comprising a barcode scanner, a weight sensor and at least one camera located in proximity to the bagging area to capture images of items while the items are being bagged. The cameras are connected to an image processor connected to a database of features and images of known objects. The image processor extracts a plurality of geometric point features from the images and identifies matches between the extracted geometric point features and the features of known objects comprised in the database. This object recognition is used together with the weight information to confirm the accuracy of the barcode scan.

The computational burden of this system is particularly heavy because the number of items in a store can be very high, and the extraction of point features and the continuous calls to such an enormous database to find matches between images can slow down the entire checkout operation and can require expensive dedicated infrastructures.

Therefore, currently there is the unsatisfied need for a self-checkout apparatus and method for automated and fast recognition of items allowing drawbacks of know apparatuses to be overcome and that drastically reduces the average time of customer checkout.

The present invention aims at overcoming prior art drawbacks by an apparatus as described hereinbefore which further comprises one or more video cameras disposed with a field of view of the transfer section and/or of the collection section for generating one or more video streams and video stream analysing means, which analysing means comprise means for automatic recognition of items communicating the recognized items to a device filling in a checkout list.

Thus, the recognition of items, allowing the item list to be progressively filled in, is performed by using one or more video cameras that acquire video streams where items are progressively present and the consequent analysis of video streams by automatic recognition means. The apparatus allows items passing through the transfer section to be identified while they are bagged by the user.

The visual recognition of items can reliably determine the checkout list and doesn't need to be used uniquely as a verification tool of a barcode scan. As a matter of fact, a barcode scanner is not necessary, and this allows for an important decrease of operational time for checkout.

The device for filling in an item list can be integrated with the apparatus of the present invention, or it can be a separate device, for example a preexistent device.

In one preferred embodiment, said means for automatic recognition of items comprise one or more neural networks specifically trained and set to recognize visual patterns identifying a series of items.

The neural networks are previously trained using predetermined datasets of items. Dataset are given as input to the neural network, that adjusts itself for recognizing what is present in the dataset.

For example, for the recognition of an item, images of the items are acquired and during training of neural networks some weights of neural networks are slowly modified for the recognition of such dataset.

Thus, the neural network learns to recognize not only such dataset, but it is able to recognize situations with changes different from the origin dataset (generalization ability), such as for example a point of view different from those in the dataset.

Neural networks are a specific tool of artificial intelligence and allow to avoid a constant connection to an image database to perform an image confrontation. The neural networks are set in a large number of internal parameters (or weights) by said training and learn to recognize autonomously the items. That means that the dataset is used to train the neural networks initially and is not needed anymore in the operative phase of the neural networks, which neural networks therefore operate autonomously.

In one embodiment, processing means connected to said video stream analysing means are provided. There are further provided visualization means and selection means connected to said processing means. The processing means are configured such that when video stream analysing means is not able to certainly identify an imaged item, one or more items are identified as the most similar to the imaged item and are visualized in a list to the user by said visualization means, so that the user can select in the list the item corresponding to the imaged item.

This means that when an item is not recognized by the video stream analysing means, a list of suggested items is presented to the user, so that a user intervention can specify the correct item. This increases the accuracy of the system, because it guarantees a human supervision in case of doubt.

In one embodiment, the video stream analysing means are configured to learn to recognize the selected item.

In this case the neural network uses information received by the user to learn to better recognize the item and therefore to improve its performances. The neural network is therefore able to perform a self-learning.

In one embodiment, a deposit section for a shopping cart or a shopping basket is provided, which deposit section is separated from said collection section by said transfer section.

This allows to easily individuate at a designing stage of the apparatus where exactly is the transfer section through which the items are to be moved, so that the cameras can be positioned with a field of view on said transfer section.

In one embodiment, a plurality of said video cameras is provided, which video cameras are oriented according to different points of view.

This allows a plurality of video streams to be obtained, each video stream being associated to a corresponding field of view, such that items show different surfaces to each video camera and the recognition can be more efficacious since it is based on a higher amount of information. Therefore, this allows items to be captured from different angle-shots, such to see also items completely hidden in at least one of the views.

According to one embodiment, analysing means comprise OCR reading means for alphanumerical characters present on items.

Thus, it is possible to analyse the video streams by combining the automatic recognition of items with reading of words written on item packaging by OCR technology. OCR reading is therefore a technique that can be added to the main technique of automatic visual recognition of items.

Even if barcode scanning is not necessary, the video stream analysing means can also comprise means for identifying and reading barcodes present on items. The term barcode means any identification code composed of a set of high contrast graphical elements.

In one embodiment, said transfer section comprises a stationary support plane, upon which the items are placed by the user before being moved to the collection section.

The user can lean the items on the stationary support plane and this allows for the item to be stationary for at least a short time interval. The video stream acquired by the camera contains in this way at least a frame wherein the item is not moving and is therefore not blurred. This improves the recognition capabilities of the system.

The support plane can be of any shape and dimension.

According to an alternative embodiment, there is no support plane and the items are taken from the shopping cart or the shopping basket and simply bagged by the user. In this case, one or more of the cameras are of any special type known in the art to allow clear and focused imaging of moving items.

The present invention further relates to a method for self-checkout at point-of-sale station, which station comprises a collection section having a bagging area within which items are collected as placed therein by a user and a transfer section wherein the items are transferred by the user from a shopping cart or a shopping basket to the collection section.

The method comprises the following steps:
a) moving items from the shopping cart or shopping basket to the collection section through the transfer section by the user;
b) acquiring one or more video streams with a field of view of the transfer section and/or of the collection section;
c) analysing the video streams;
d) automatic recognition of items in the video streams;
e) filling in a checkout list with the recognized items.

According to one embodiment, the automatic recognition of items is carried out by one or more neural networks specifically trained and set to recognize visual patterns identifying a series of items. There is provided a step training said neural networks, which training step uses predetermined datasets of items.

In one embodiment, when an imaged item is not recognized, one or more items are identified as the most similar to the imaged item and are visualized in a list to the user, so that the user can select in the list the item corresponding to the imaged item.

In one embodiment, the neural networks are configured to learn to recognize the selected item.

In one embodiment, said transfer section comprises a stationary support plane, upon which the items are placed by the user before being moved to the collection section.

These and other features and advantages of the present invention will be clearer from the following description of some embodiments shown in the annexed drawings wherein:
Fig.1 is one embodiment of the apparatus;
Fig. 2 is another embodiment of the apparatus comprising a support plane;
Fig. 3 is a lateral view of the transfer section;
Fig. 4 is an upper view of another embodiment of the apparatus.
Fig.5 is a block diagram of the apparatus;
Fig.6 is a flow chart of the method.

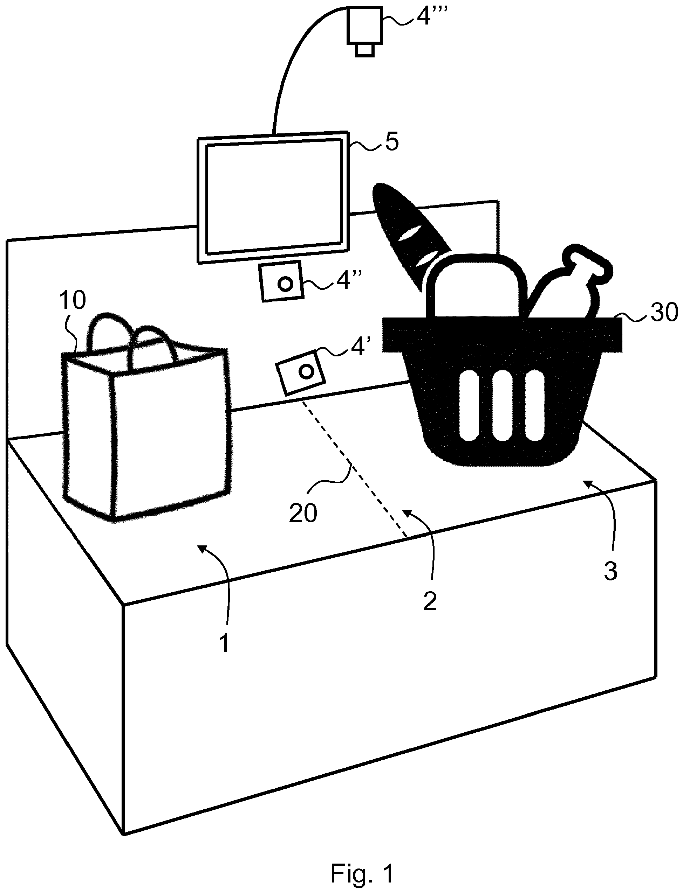

Figure 1 shows an embodiment of a self-checkout apparatus for point-of-sale according to the present invention. The apparatus comprises a collection section 1 having a bagging area within which items are collected as placed therein by a user. The bagging area can comprise a shopping bag support and one or more shopping bags 10.

The apparatus further comprises a transfer section 2 wherein the items are transferred by the user from a shopping basket 30 to the collection section 1. A deposit section 3 for the shopping basket 30 is provided, which deposit section 3 is separated from the collection section 1 by the transfer section 2.

Alternatively, the items can be taken from a shopping cart, not shown in the figures. In this case the deposit section 3 is shaped and configured as to receive a shopping cart.

The apparatus further comprises a plurality of video cameras 4 disposed with a field of view of the transfer section 2 for generating one or more video streams and video stream analysing means, which analysing means comprise means for automatic recognition of items communicating the recognized items to a device filling in a checkout list.

Alternatively or in combination, the video cameras can be disposed with a field of view of the collection section 1.

The transfer section 2 can be of any suitable dimension and shape. In order to take up a minimal amount of space, the transfer section 2 can be reduced to a vertical plane, as indicated by the dashed line 20 in Figure 1, separating the deposit section 3 and the collection section 1. The items must pass through said vertical plane and during this passage are acquired by the video cameras.

Advantageously, one or more of the cameras 4 are of any special type known in the art to allow clear and focused imaging of moving items. For example, cameras using global shutter technology can be used. In a sensor, a global shutter controls incoming light to all photosites simultaneously. At any given point in time, all photosites are therefore either equally closed or equally open. The global shutter technology can generate a highly accurate representation of moving items, since everything within each frame happens simultaneously.

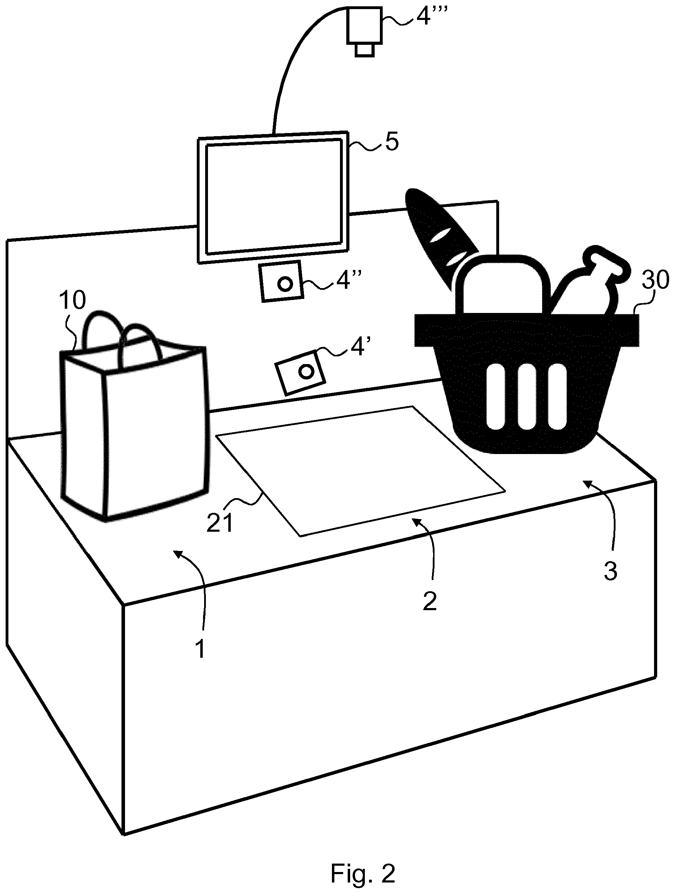

The device for filling in an item list can be integrated with the apparatus of the present invention, or it can be a separate device, for example a preexistent device. In the embodiments of Figures 1 and 2, the device for filling in an item list is integrated with the apparatus, and the apparatus comprises a screen 5 for visualizing the items list as it is created by said means for automatic recognition of items.

Figure 2 shows another embodiment, wherein the transfer section 2 comprises a stationary support plane 21. The user places the items upon the support plane 21 before moving them to the collection section 1. In this case the items are stationary for at least a short time interval, and less specific cameras can be used.

The support plane 21 can be of any shape and dimension. Preferably, it is of rectangular shape, with sides ranging from 50 to 100 cm, in particular about 80 cm. This dimension allows a small number of items to be placed on the support plane 21 simultaneously, in particular about 7 items. This allows a precise recognition of items.

A plurality of said video cameras 4 is provided and they are oriented according to different points of view. The number of cameras 4 and their disposition can be varied according to the shape and dimension of the apparatus. In a preferred embodiment shown in the figures, three cameras 4', 4", 4"' pointing to the transfer section 2 are used.

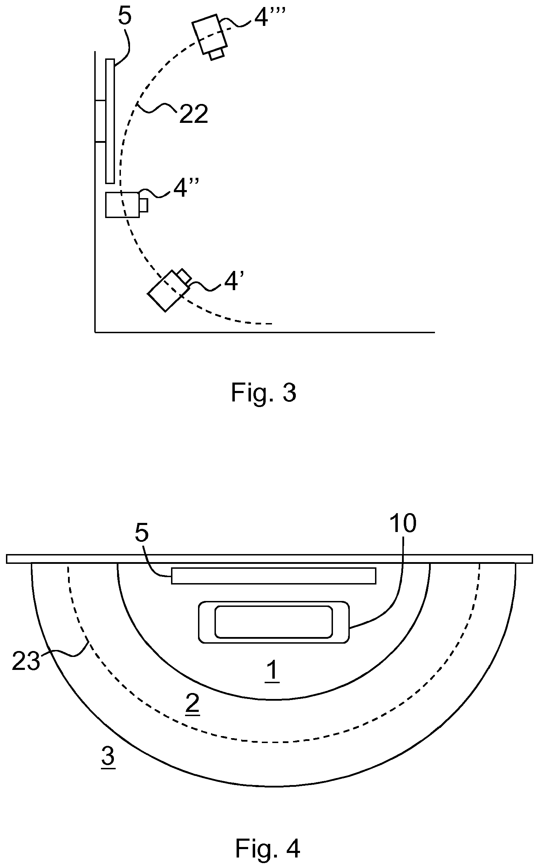

Figure 3 shows a possible disposition of the three cameras 4', 4", 4''' along a curved line 22 lying in the vertical plane cited above in reference to Figure 1. First camera 4' is placed in the lowermost part and is oriented upward, tilted at about 45° with reference to the horizontal plane, second camera 4" is placed under the screen 5 and is pointed horizontally toward the user and third camera 4''' is placed above the screen 5 and oriented downward.

Other cameras can be provided, in order to increase the number of point of views to intercept the items wherever they are passed by the user.

Figure 4 shows another embodiment of the apparatus, wherein the collection section 1 is crescent-shaped and the transfer section 2 is constituted by a band surrounding the entering edge of the collection section 1. The deposit section 3 is placed outside the collection section 1, so that a shopping basket 30 or a shopping cart is placed near the transfer section 2, and the items are passed therethrough to enter the collection section 1. In this case a plurality of cameras can be placed oriented towards the transfer section 2, for example along the dashed line 23 of Figure 4.

Other shapes of the collection section 1 and/or the transfer section 2 and/or the deposit section 3 can be provided.

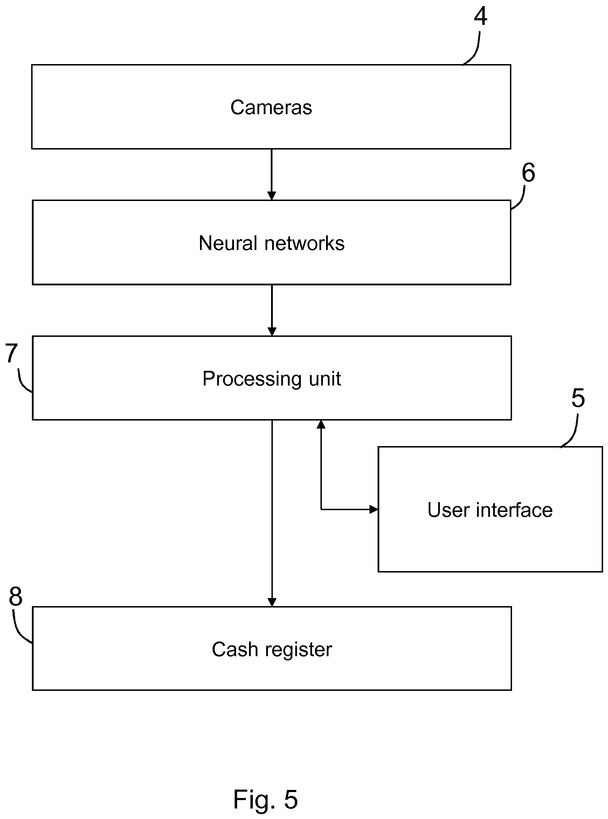

Figure 5 shows a block diagram of the apparatus. The cameras 4 acquire images of the transfer section 2 for generating video streams. This video streams are fed to video stream analysing means, which analysing means comprise means for automatic recognition of items. In this preferred embodiment, the means for automatic recognition of items comprise a plurality of neural networks 6 specifically trained and set to recognize visual patterns identifying a series of items.

Analysing means can also comprise OCR reading means for alphanumerical characters present on items and/or means for identifying and reading barcodes present on items.

There are provided processing means connected to the video stream analysing means, constituted by a processing unit 7 which receives the output from the neural networks 6.

When the item is correctly identified by the neural networks 6, the processing unit 7 sends the information to a device filling in a checkout list, for example a cash register 8.

When the neural networks 6 is not able to certainly identify an imaged item, one or more items are identified as the most similar to the imaged item and are visualized in a list to the user, so that the user can select in the list the item corresponding to the imaged item. To do so, visualization means and selection means are provided, which are connected to the processing unit 7 and which are constituted for example by the screen 5. In this case the screen 5 is a touch screen that works as user interface.

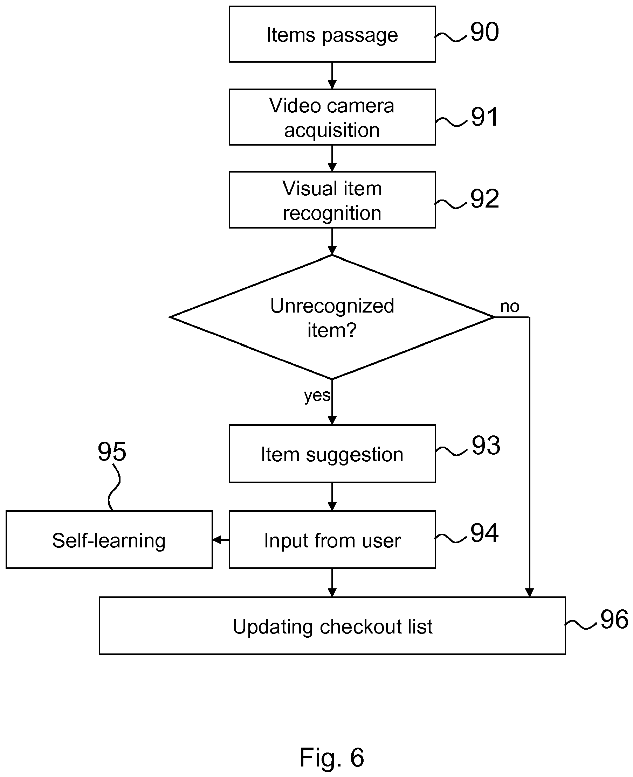

As shown in Figure 6, the method according to the present invention comprises the following steps.

First, the items are moved 90 from the shopping basket or shopping cart to the collection section 1 through the transfer section 2 by the user.

The cameras 4 acquire one or more video streams 91 with a field of view of the transfer section 2 and/or of the collection section 1.

The video streams are then analyzed by a plurality of neural networks 6 to carry out an automatic recognition 92 of items in the video streams.

The automatic recognition of items is carried out by neural networks 6, there being further provided an earlier step training said neural networks 6, which training step uses predetermined datasets of items.

When an imaged item is correctly recognized, the checkout list is updated 96 with the new entry.

When an imaged item is not recognized, one or more items are identified as the most similar to the imaged item and are visualized in a list and suggested 93 to the user.

The user can select 94 in the list the item corresponding to the imaged item.

Thus, the checkout list is updated 96 with the item selected by the user.

The neural networks then learn to recognize the selected item, performing a self-learning 95.

## Claims

1. Self-checkout apparatus for point-of-sale, comprising a collection section (1) having a bagging area within which items are collected as placed therein by a user and a transfer section (2) wherein the items are transferred by the user from a shopping cart or a shopping basket (30) to the collection section (1),
**characterized in that**
it comprises one or more video cameras (4) disposed with a field of view of the transfer section (2) and/or of the collection section (1) for generating one or more video streams and video stream analysing means, which analysing means comprise means for automatic recognition of items communicating the recognized items to a device filling in a checkout list (8).

2. Apparatus according to claim 1, wherein said means for automatic recognition of items comprise one or more neural networks (6) specifically trained and set to recognize visual patterns identifying a series of items.

3. Apparatus according to one or more of the preceding claims, wherein processing means connected to said video stream analysing means are provided, being further provided visualization means and selection means connected to said processing means, which processing means are configured such that when video stream analysing means is not able to certainly identify an imaged item, one or more items are identified as the most similar to the imaged item and are visualized in a list to the user by said visualization means, so that the user can select in the list the item corresponding to the imaged item.

4. Apparatus according to claim 3, wherein the video stream analysing means are configured to learn to recognize the selected item.

5. Apparatus according to one or more of the preceding claims, wherein a deposit section (3) for a shopping cart or a shopping basket (30) is provided, which deposit section (3) is separated from said collection section (1) by said transfer section (2).

6. Apparatus according to one or more of the preceding claims, wherein said transfer section (2) comprises a stationary support plane (21), upon which support plane the items are placed by the user before being moved to the collection section (1).

7. Method for self-checkout at point-of-sale station, which station comprises a collection section (1) having a bagging area within which items are collected as placed therein by a user and a transfer section (2) wherein the items are transferred by the user from a shopping cart or a shopping basket (30) to the collection section (1),
**characterized in that**
it comprises the following steps:
a) moving items from the shopping cart or shopping basket (30) to the collection section (1) through the transfer section (2) by the user;
b) acquiring one or more video streams with a field of view of the transfer section (2) and/or of the collection section (1);
c) analysing the video streams;
d) automatic recognition of items in the video streams;
e) filling in a checkout list with the recognized items.

8. Method according to claim 7, wherein the automatic recognition of items is carried out by one or more neural networks (6) specifically trained and set to recognize visual patterns identifying a series of items.

9. Method according to claim 8, wherein, when an imaged item is not recognized, one or more items are identified as the most similar to the imaged item and are visualized in a list to the user, so that the user can select in the list the item corresponding to the imaged item.

10. Method according to claim 9, wherein the neural networks are configured to learn to recognize the selected item.

11. Method according to one or more of claims from 7 to 10, wherein said transfer section (1) comprises a stationary support plane (21), upon which support plane the items are placed by the user before being moved to the collection section (1).
